# EUROPEAN PATENT APPLICATION

(11) **EP 4 394 469 A1**
(43) Date of publication of application: **03.07.2024**
(21) Application number: 22874938.8
(22) Date of filing: 27.09.2022
(51) Int. Cl.: G02B 6/42

(54) **OPTICAL MODULE CAGE ASSEMBLY AND OPTICAL COMMUNICATION APPARATUS**

(30) Priority: 30.09.2021 CN 202111165348
(71) Applicant: Huawei Technologies Co., Ltd., Shenzhen, Guangdong 518129 (CN)
(72) Inventor: ZHOU, Cong, Shenzhen, Guangdong 518129 (CN); ZHAO, Caijun, Shenzhen, Guangdong 518129 (CN); YAN, Bo, Shenzhen, Guangdong 518129 (CN)
(74) Representative: Isarpatent
(86) International application number: PCT/CN2022/121856
(87) International publication number: WO 2023/051553

(57) **Abstract**

An optical cage assembly includes an optical cage (1), a heat sink (2), and at least one shield (3). The heat sink (2) includes a main body part (21) and a boss part (22), the main body part (21) is located on an outer surface of a first housing wall (11), and the boss part (22) is located on a window (110) of the optical cage (1). The shield (3) is located on a path through which an electromagnetic signal leaks to the outside through the window (110), and is in contact with a side wall (212) of the main body part (21) of the heat sink (2). The optical cage assembly improves shielding performance deterioration of the optical cage (1) caused by window opening after the shield (3) is added, and does not affect a size of the boss part (22) of the heat sink (2), so that heat dissipation performance of the optical cage assembly does not deteriorate while shielding performance of the optical cage assembly is improved. An optical communication device including the optical cage assembly is further provided.

## Description

This disclosure claims priority to Chinese Patent Application No. 202111165348.2, filed on September 30, 2021 and entitled "OPTICAL CAGE ASSEMBLY AND OPTICAL COMMUNICATION DEVICE", which is incorporated herein by reference in its entirety.

### TECHNICAL FIELD

This disclosure relates to the field of communication technologies, and in particular, to an optical cage assembly and an optical communication device.

### BACKGROUND

An optical cage is a housing of an interface component of an optical communication device, and has a slot. The slot is configured to insert an optical module, to implement interconnection between the optical module and a connector in the optical cage. In addition, when the optical module works, the optical module radiates an electromagnetic signal to the outside, and the optical cage may also shield the electromagnetic signal.

To dissipate heat for the optical module, a window is usually opened on a top wall of the optical cage, and a heat sink is added on the top wall of the optical cage. A part of the heat sink extends into the inside of the optical cage through the window, and is in contact with the optical module, to absorb the heat generated by the optical module.

However, after the window is opened on the top wall of the optical cage, the electromagnetic signal radiated by the optical module to the outside leaks out from a gap between the window and the heat sink, and consequently shielding performance of the optical cage deteriorates.

### SUMMARY

This disclosure provides an optical cage assembly and an optical communication device. The optical cage assembly includes a shield, and the shield is in contact with a side wall of a main body part of a heat sink, so that shielding effect of the optical cage assembly can be improved. Technical solutions of the optical cage assembly and the optical communication device are described as follows.

According to a first aspect, an optical cage assembly is provided. The optical cage assembly includes an optical cage, a heat sink, and at least one shield. A first housing wall of the optical cage is provided with a window. The heat sink includes a main body part and a boss part, a bottom wall of the main body part is connected to the boss part, the main body part is located on an outer surface of the first housing wall, and the boss part is located on the window. The at least one shield is located on a path through which an electromagnetic signal leaks to the outside through the window, and is in contact with a side wall of the main body part.

The optical cage is a housing of an interface component of the optical communication device, and has a slot for accommodating an optical module. A connector is provided inside the slot, and the connector is configured to interconnect to the optical module. A type of the optical cage is not limited in this disclosure. The optical cage may be a single-layer optical cage, or may be a double-layer optical cage, a conjoined optical cage, or the like. In a possible implementation, the optical cage is a quad small form factor pluggable-double density (quad small form factor pluggable-double density, QSFP-DD) optical cage.

The first housing wall of the optical cage is provided with the window, and the first housing wall may be any housing wall on the optical cage. In a possible implementation, the first housing wall may be a housing wall adjacent to an opening of the slot. For example, the first housing wall is a housing wall that is of the optical cage and that is configured to connect to a printed circuit board. For another example, the first housing wall is a housing wall opposite to the housing wall that is of the optical cage and that is configured to connect to the printed circuit board. The window is used for the boss part of the heat sink to extend into the inside of the optical cage, and may be in any shape. For example, the window may be a rectangle, but is not limited thereto.

The heat sink is configured to improve heat dissipation performance of the optical cage assembly. The heat sink includes the main body part and the boss part. In a possible implementation, the main body part includes a substrate and a heat sink fin, a bottom wall of the substrate is connected to the boss part, and a top wall of the substrate is connected to the heat sink fin. A manner of fastening the heat sink is not limited in this disclosure. In a possible implementation, the optical cage assembly further includes a fastener, where the fastener is fastened to the optical cage, and tightly presses the heat sink and the optical cage.

The shield is configured to improve shielding performance of the optical cage assembly.

According to the technical solution provided in this disclosure, the optical cage assembly provided in this disclosure includes the optical cage, the heat sink, and the shield. The main body part of the heat sink is on the outer surface of the first housing wall of the optical cage, and the boss part is located on the window. The shield is located on the path through which the electromagnetic signal leaks to the outside through the window, and is in contact with the side wall of the main body part, so that the optical cage assembly can suppress electromagnetic noise generated by the optical module, and has good shielding performance.

In addition, because the shield is in contact with the side wall of the main body part, a size of the boss part is not affected. The size of the boss part may be designed based on an actual requirement, so that heat dissipation performance of the optical cage assembly is also good.

In a possible implementation, all the optical cage, the heat sink, and the at least one shield are electrically conductive, and the at least one shield is electrically connected to the optical cage and the heat sink separately.

According to the technical solution provided in this disclosure, the shield provided in this disclosure is electrically conductive. The shield is fastened to the first housing wall of the optical cage and is in contact with the heat sink, so that the shield is electrically connected to both the optical cage and the heat sink, thereby forming a shielding structure in a form of "heat sink-shield-optical cage". The shielding structure can suppress the electromagnetic signal radiated by the optical module to the outside.

In a possible implementation, the at least one shield is made of a wave-absorbing material.

According to the technical solution provided in this disclosure, the shield may be made of the wave-absorbing material, and electromagnetic noise generated by the optical module may be suppressed by absorbing a leaked electromagnetic signal, so that the optical cage assembly has good shielding performance.

In a possible implementation, the shield is located on a side of the main body part of the heat sink.

In a possible implementation, each shield includes a support strip and an elastic piece. The support strip is fastened on the outer surface of the first housing wall and extends along any edge of the window. The elastic piece is in contact with the support strip, and the elastic piece is in contact with the side wall of the main body part.

Both the support strip and the elastic piece may be electrically conductive, or both may be made of the wave-absorbing material, or at least the elastic piece is made of the wave-absorbing material.

According to the technical solution provided in this disclosure, the optical cage assembly forms a shielding structure in a form of "heat sink-elastic piece-support strip-optical cage". The elastic piece has elasticity, and therefore can better fill an air gap between the support strip and the side wall of the main body part, so that shielding effect of the optical cage assembly is good.

In a possible implementation, the support strip includes a fastening plate and a support plate, and a surface of the fastening plate is fastened to a side wall of the support plate. A surface that is of the fastening plate and that is away from the support plate is fastened to the first housing wall. The support plate is fastened to or tightly attached to the elastic piece.

The fastening plate and the support plate may be perpendicular to each other. The support plate is opposite to the side wall of the main body part of the heat sink, and the elastic piece may be filled in the air gap between the support plate and the side wall of the heat sink.

According to the technical solution provided in this disclosure, the surface of the fastening plate is disposed to be fastened to the first housing wall, to increase an area of a connection between the support strip and the first housing wall, so that the support strip is fastened to the first housing wall more stably.

In a possible implementation, there are a plurality of heat sinks, and two shields are disposed between two adjacent heat sinks. The two shields are respectively in contact with the adjacent heat sinks, and support strips of the two shields share a same fastening plate.

According to the technical solution provided in this disclosure, it is designed that the support strips of the two shields between the two adjacent heat sinks share the same fastening plate, so that the two support strips are actually one component, thereby reducing a quantity of components included in the optical cage assembly. In addition, a width of the fastening plate is larger, so that the support strip is fastened to the first housing wall more stably.

In a possible implementation, the support strip is integrally bent and formed.

According to the technical solution provided in this disclosure, the support strip is disposed to be integrally bent and formed, so that the support strip is manufactured more conveniently and has high strength.

In a possible implementation, the support strip includes the support plate. A side wall of the support plate is fastened to the first housing wall. The support plate is fastened to or tightly attached to the elastic piece.

In a possible implementation, the support plate is integratedly connected to an edge of the window, and the support plate is bent against the first housing wall.

In a possible implementation, the elastic piece is fastened to the support strip, and is tightly attached to the side wall of the main body part.

According to the technical solution provided in this disclosure, the elastic piece is disposed to be fastened to the support strip, so that the shield is manufactured more conveniently, and the optical cage assembly is manufactured more conveniently.

In a possible implementation, the elastic piece is fastened to the main body part, and is tightly attached to the support strip.

In a possible implementation, the shield includes the support strip, the side wall of the main body part of the heat sink has the elastic piece, and the support strip is tightly attached to the elastic piece.

In a possible implementation, the elastic piece includes one or more of a metal spring plate, conductive foam, conductive rubber, and a metal spring point.

In a possible implementation, the at least one shield includes at least two first shields. The two first shields respectively extend along two long edges of the window, where the long edge is an edge extending along a length direction of the window.

In a possible implementation, the at least one shield includes at least the two first shields, and the two first shields are respectively located on sides of the two long edges of the window.

In a possible implementation, each first shield includes at least a first shielding segment. The first shielding segment is located between two ends of the long edge.

According to the technical solution provided in this disclosure, the first shielding segment is disposed on a long edge or a side of the long edge on which more electromagnetic signal are leaked, so that shielding performance of the optical cage assembly can be effectively improved.

In a possible implementation, each first shield includes at least the first shielding segment. The first shielding segment is located between two straight lines on which two wide edges of the window are located.

In a possible implementation, the first shielding segment is located on a side of the long edge.

In a possible implementation, the first shielding segment is integratedly connected to the long edge.

In a possible implementation, each first shield further includes a second shielding segment. The second shielding segment is located outside the two ends of the long edge.

In a possible implementation, each first shield further includes the second shielding segment. The second shielding segment is located outside a range limited by the two straight lines on which the two wide edges of the window are located.

In a possible implementation, the at least one shield further includes at least one second shield. The second shield extends along any wide edge of the window, where the wide edge is an edge extending along a width direction of the window.

In a possible implementation, the at least one shield further includes the at least one second shield. The second shield is located on a side of the any wide edge of the window, where the wide edge is the edge extending along the width direction of the window.

In a possible implementation, there are two second shields, and the two second shields respectively extend along two wide edges of the window.

According to the technical solution provided in this disclosure, two first shields and two second shields are disposed to enclose the heat sink, so that shielding performance of the optical cage assembly is good.

In a possible implementation, there are a plurality of shields, and the plurality of shields enclose the heat sink.

According to a second aspect, an optical communication device is provided. The optical communication device includes the optical cage assembly according to any one of the first aspect.

According to the optical communication device provided in this disclosure, the optical cage assembly provided in the first aspect is applied, so that both heat dissipation performance of the optical communication device and electromagnetic noise shielding performance of the optical module are good.

### BRIEF DESCRIPTION OF DRAWINGS

FIG. 1 is a schematic diagram of an optical cage assembly according to an embodiment of this disclosure;
FIG. 2 is a schematic diagram of an optical cage assembly according to an embodiment of this disclosure;
FIG. 3 is a schematic diagram of an optical cage assembly according to an embodiment of this disclosure;
FIG. 4 is a schematic diagram of an optical cage assembly according to an embodiment of this disclosure;
FIG. 5 is a partial schematic diagram of an optical cage assembly according to an embodiment of this disclosure;
FIG. 6 is a schematic diagram of a shield according to an embodiment of this disclosure;
FIG. 7 is a schematic diagram of a shield according to an embodiment of this disclosure;
FIG. 8 is a schematic diagram of a shield according to an embodiment of this disclosure;
FIG. 9 is a schematic diagram of a shield according to an embodiment of this disclosure;
FIG. 10 is a schematic diagram of a shield according to an embodiment of this disclosure;
FIG. 11 is a schematic diagram of a shield according to an embodiment of this disclosure;
FIG. 12 is a schematic diagram of a shield according to an embodiment of this disclosure;
FIG. 13 is a schematic diagram of an optical cage assembly in which a heat sink is hidden according to an embodiment of this disclosure;
FIG. 14 is a schematic diagram of an optical cage assembly in which a heat sink is hidden according to an embodiment of this disclosure;
FIG. 15 is a schematic diagram of an optical cage assembly in which a heat sink is hidden according to an embodiment of this disclosure;
FIG. 16 is a schematic diagram of an optical cage assembly in which a heat sink is hidden according to an embodiment of this disclosure;
FIG. 17 is a schematic diagram of an optical cage assembly in which a heat sink is hidden according to an embodiment of this disclosure; and
FIG. 18 is a schematic diagram of an optical cage assembly in which a heat sink is hidden according to an embodiment of this disclosure.

### Reference numerals:

1: Optical cage; 10: Slot; 11: First housing wall; 110: Window; 111: Long edge; and 112: Wide edge;
2: Heat sink; 21: Main body part; 21a: Substrate; 21b: Heat sink fin; 211: Bottom wall; 212: Side wall; and 22: Boss part;
3: Shield; 301: Support strip; 3011: Fastening plate; 3012: Support plate; 302: Elastic piece; 3021: Support part; 3022: Spring plate part; 3023: Connection plate; 3024: Spring point; 31: First shield; 311: First shielding segment; 312: Second shielding segment; and 32: Second shield; and
a: Printed circuit board; b: Optical module; and c: Connector.

### DESCRIPTION OF EMBODIMENTS

As an optical-to-electrical conversion component, an optical module is widely used in various optical communication devices. As a transmission rate and a transmission capacity of the optical module increase, power consumption of the optical module also increases, and a heat dissipation problem of the optical module becomes a bottleneck that restricts product evolution and performance improvement.

When being used, the optical module needs to be inserted into an optical cage of the optical communication device, to implement interconnection between the optical module and a connector in the optical cage. To improve heat dissipation performance of the optical module, a window is generally opened on a top wall of the optical cage, and an external heat sink is added. The heat sink includes a main body part and a boss part. The boss part extends into the inside of the optical cage through the window, and is in contact with the optical module. The main body part is located outside the optical cage, and is connected to the top wall. The main body part usually has a heat sink fin. Heat generated when the optical module works can be conducted to the main body part through the boss part, and dissipated through the heat sink fin on the main body part.

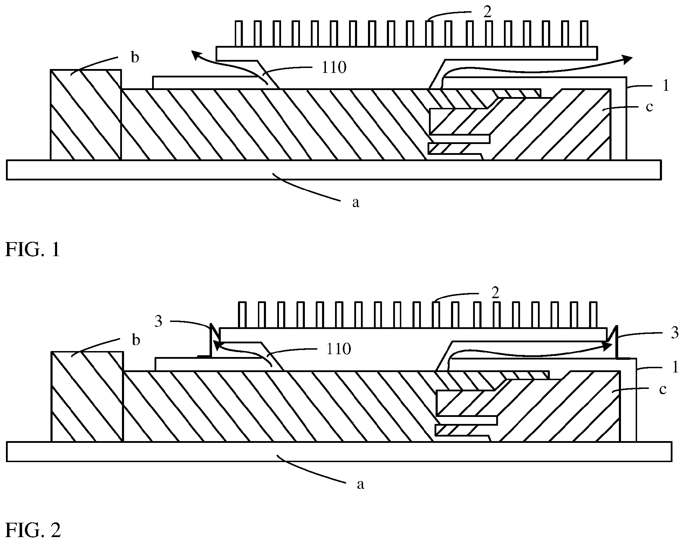

However, after the top wall of the optical cage is opened, complete shielding of the optical cage is damaged, and electromagnetic noise generated by the optical module leaks from a gap between the window and the heat sink, as shown in FIG. 1 (an arrow in FIG. 1 shows a leakage path of an electromagnetic signal). Radiation of the optical module to the outside deteriorates significantly, and even causes the optical communication device to fail to meet an electromagnetic radiation requirement of an electromagnetic compatibility (electro magnetic compatibility, EMC) standard.

To suppress electromagnetic radiation of the optical module to the outside, in a conventional technology, a layer of compressible conductive gaskets in a closed square pattern is added around the boss part of the heat sink between the top wall of the optical cage and a bottom wall of the main body part of the heat sink. The conductive gasket can fill an air gap between the optical cage and the heat sink, thereby suppressing leakage of electromagnetic radiation.

However, because the conductive gasket is located around the boss part, the conductive gasket affects a size of the boss part. A width of the conductive gasket is in an inverse proportion to a width of the boss part. If the width of the boss part is large, the width of the conductive gasket is small, the conductive gasket is difficult to be stably fastened on the optical cage, and the conductive gasket easily falls off. If the width of the conductive gasket is large, the width of the boss part is small, and heat dissipation performance of the optical cage deteriorates. In other words, using the technical solution in the conventional technology affects heat dissipation performance of the optical cage.

In view of the foregoing technical problem, an embodiment of this disclosure provides an optical cage assembly. The optical cage assembly has good shielding performance and heat dissipation performance. The following describes an example of the optical cage assembly provided in this embodiment of this disclosure.

An embodiment of this disclosure provides an optical cage assembly. As shown in FIG. 2 to FIG. 4, the optical cage assembly includes an optical cage 1, a heat sink 2, and at least one shield 3. A first housing wall 11 of the optical cage 1 is provided with a window 110. The heat sink 2 includes a main body part 21 and a boss part 22, a bottom wall 211 of the main body part 21 is connected to the boss part 22, the main body part 21 is located on an outer surface of the first housing wall 11, and the boss part 22 is located on the window 110. The at least one shield 3 is located on a path through which an electromagnetic signal leaks to the outside through the window, and is in contact with a side wall 212 of the main body part 21.

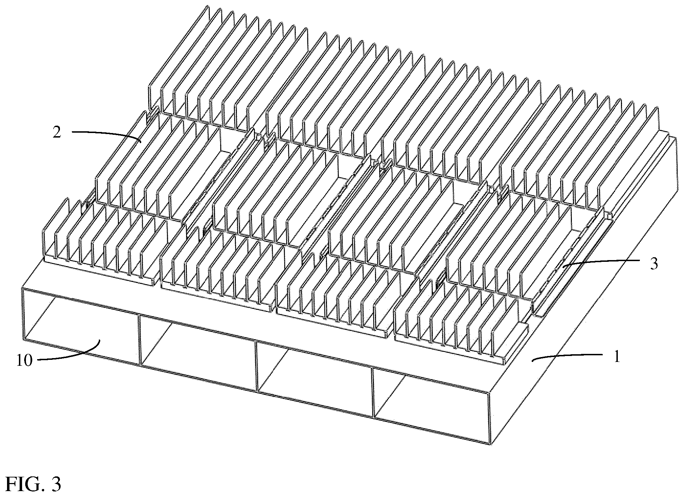

The optical cage 1 is a housing of an interface component of an optical communication device, and has a slot 10 for accommodating an optical module. A connector is provided inside the slot 10, and the connector is configured to interconnect to the optical module. A type of the optical cage 1 is not limited in this embodiment of this disclosure. The optical cage 1 may be a single-layer optical cage, or may be a double-layer optical cage, a conjoined optical cage, or the like. In some examples, as shown in FIG. 3, the optical cage 1 is a quad small form factor pluggable-double density (quad small form factor pluggable-double density, QSFP-DD) optical cage.

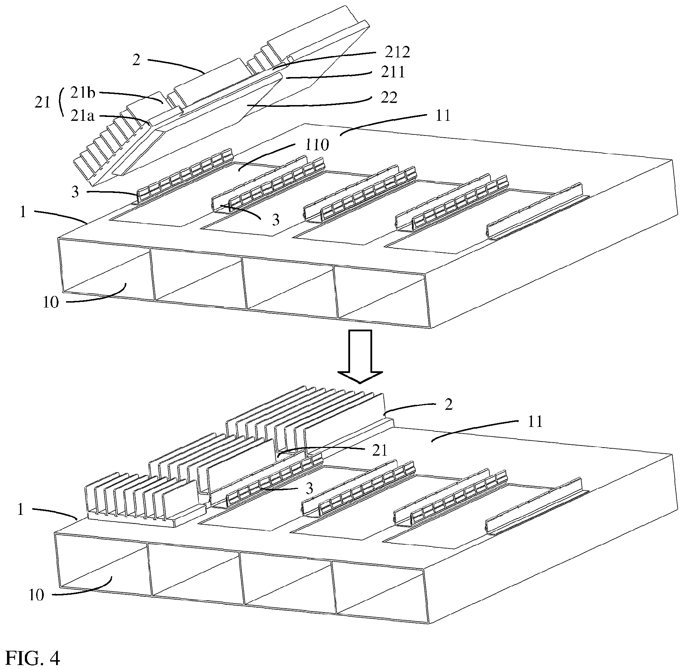

The first housing wall 11 of the optical cage 1 is provided with the window 110, and the first housing wall 11 may be any housing wall on the optical cage 1. In some examples, the first housing wall 11 may be a housing wall adjacent to an opening of the slot 10. For example, the first housing wall 11 is a housing wall that is of the optical cage 1 and that is configured to connect to a printed circuit board. For another example, the first housing wall 11 is a housing wall opposite to the housing wall that is of the optical cage 1 and that is configured to connect to the printed circuit board. For another example, the first housing wall 11 is a side wall of the optical cage 1, and the side wall is perpendicular to the printed circuit board. The window 110 is used for the boss part 22 of the heat sink 2 to extend into the inside of the optical cage 1, and may be in any shape. For example, as shown in FIG. 4, the window 110 may be a rectangle, but is not limited thereto.

The heat sink 2 is configured to improve heat dissipation performance of the optical cage assembly. The heat sink 2 includes the main body part 21 and the boss part 22. In some examples, as shown in FIG. 4, the main body part 21 includes a substrate 21a and a heat sink fin 21b, a bottom wall 211 of the substrate 21a is connected to the boss part 22, and a top wall of the substrate 21a is connected to the heat sink fin 21b. A manner of fastening the heat sink 2 is not limited in this embodiment of this disclosure. In some examples, the optical cage assembly further includes a fastener, where the fastener is fastened to the optical cage 1, and tightly presses the heat sink 2 and the optical cage 1.

The shield 3 is configured to improve shielding performance of the optical cage assembly. The shield 3 is electrically conductive, for example, may be made of a copper alloy. The shield 3 is fastened to the first housing wall 11 of the optical cage 1, is located on the path through which the electromagnetic signal leaks to the outside through the window 110, and is in contact with the side wall 212 of the main body part 21 of the heat sink 2, so that the shield 3 is electrically connected to both the optical cage 1 and the heat sink 2, thereby forming a shielding structure in a form of "heat sink 2-shield 3-optical cage 1". The shielding structure can suppress the electromagnetic signal radiated by the optical module to the outside. A position of the shield 3 is not limited in this embodiment of this disclosure, and the shield 3 may be in contact with any side wall 212 of the main body part 21.

According to the technical solution provided in this embodiment of this disclosure, the optical cage assembly provided in this embodiment of this disclosure includes the optical cage 1, the heat sink 2, and the shield 3. The main body part 21 of the heat sink 2 is on the outer surface of the first housing wall 11 of the optical cage 1, and the boss part 22 is located on the window 110. The shield 3 is fastened to the outer surface of the first housing wall 11, and is in contact with the side wall 212 of the main body part 21, to form a shielding structure in a form of "heat sink 2-shield 3-optical cage 1". Therefore, the optical cage assembly can suppress electromagnetic noise generated by the optical module, and has good shielding performance.

In addition, because the shield 3 is in contact with the side wall 212 of the main body part 21, a size of the boss part 22 is not affected. The size of the boss part 22 may be designed based on an actual requirement, so that heat dissipation performance of the optical cage assembly is also good.

The following describes a structure of the shield 3 in more detail by using an example.

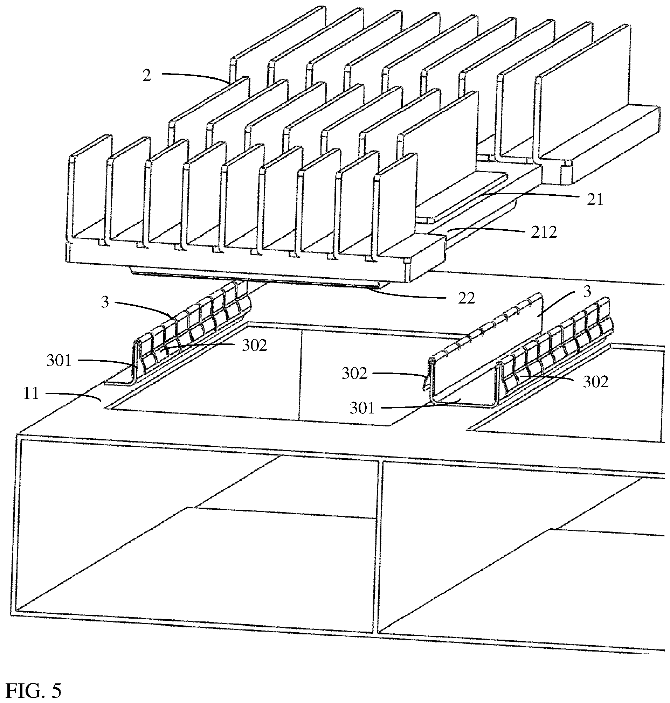

In some examples, as shown in FIG. 5, the shield 3 includes a support strip 301 and an elastic piece 302. The support strip 301 is fastened on the outer surface of the first housing wall 11 and extends along any edge of the window 110. The elastic piece 302 is in contact with the support strip 301, and the elastic piece 302 is in contact with the side wall 212 of the main body part 21.

The support strip 301 is in a long strip shape and may extend along any edge of the window 110. In some examples, the support strip 301 extends along a long edge 111 of the window 110. In other examples, the support strip 301 extends along a wide edge 112 of the window 110.

A form of the elastic piece 302 is not limited in this embodiment of this disclosure. In some examples, the elastic piece 302 may be in a long strip shape and extend along the support strip 301. In some other examples, there are a plurality of elastic pieces 302, and the plurality of elastic pieces 302 are distributed at spacings along the support strip 301.

Both the support strip 301 and the elastic piece 302 are electrically conductive, so that the optical cage assembly forms a shielding structure in a form of "heat sink 2-elastic piece 302-support strip 301-optical cage 1". The elastic piece 302 has elasticity, and therefore can better fill an air gap between the support strip 301 and the side wall 212 of the main body part 21, so that shielding effect of the optical cage assembly is good.

The following describes the support strip 301 in more detail by using an example.

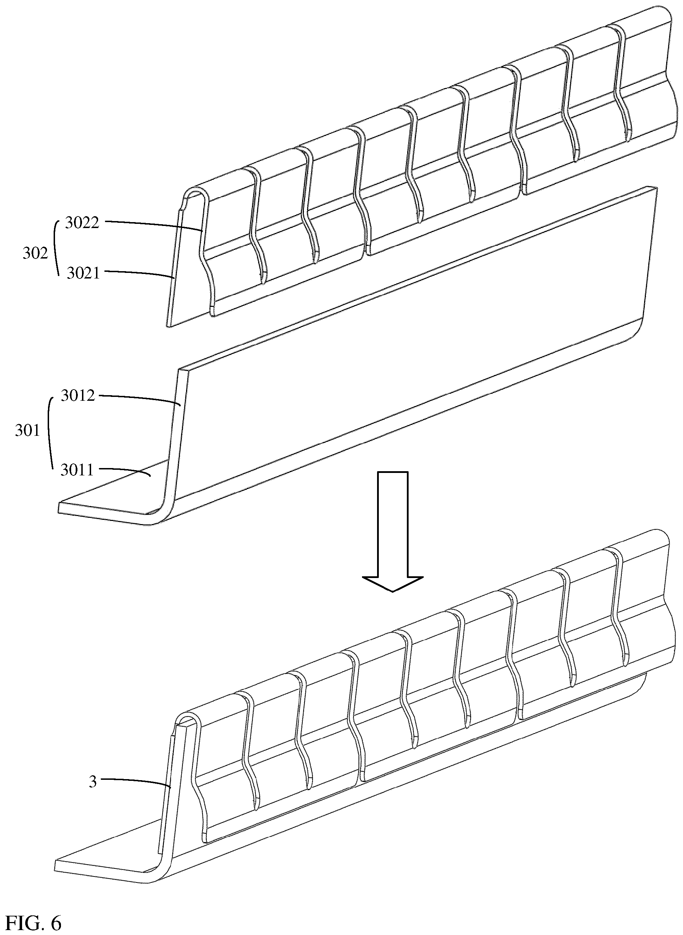

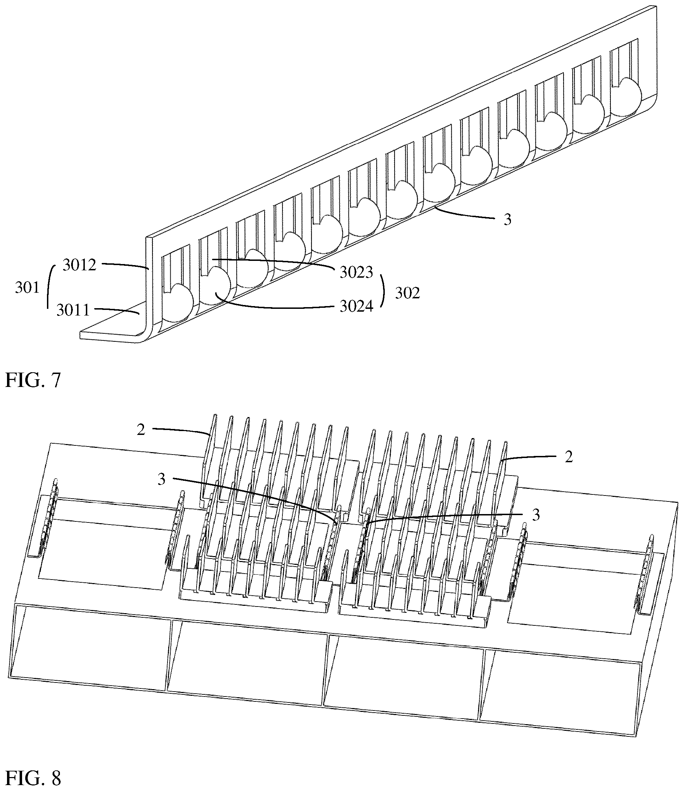

In some examples, as shown in FIG. 6 and FIG. 7, the support strip 301 includes a fastening plate 3011 and a support plate 3012, and a surface of the fastening plate 3011 is fastened to a side wall of the support plate 3012. A surface that is of the fastening plate 3011 and that is away from the support plate 3012 is fastened to the first housing wall 11. The support plate 3012 is fastened to or tightly attached to the elastic piece 302.

The fastening plate 3011 can increase an area of a connection between the support strip 301 and the first housing wall 11, so that the support strip 301 is fastened to the first housing wall 11 more stably. A manner of fastening the fastening plate 3011 to the first housing wall 11 may be welding, bonding, or the like, but is not limited thereto. In some examples, the fastening plate 3011 and the support plate 3012 are perpendicular to each other.

The support plate 3012 is configured to fasten the elastic piece 302 or be tightly attached to the elastic piece 302. The support plate 3012 is opposite to the side wall 212 of the main body part 21 of the heat sink 2, and the elastic piece 302 may be filled in the air gap between the support plate 3012 and the side wall 212 of the main body part 21.

In some examples, as shown in FIG. 6 and FIG. 7, one fastening plate 3011 is fastened to one support plate 3012.

In some other examples, as shown in FIG. 8 to FIG. 10, there are a plurality of heat sinks 2, and there are two shields 3 between two adjacent heat sinks 2. The two shields 3 are respectively in contact with the adjacent heat sinks 2, and support strips 301 of the two shields 3 share a same fastening plate 3011. In this way, the two support strips 301 are actually one component, a quantity of components included in the optical cage assembly is reduced, and a width of the fastening plate 3011 is larger, so that the support strips 301 are fastened to the first housing wall 11 more stably.

In some other examples, the support strips 301 of the two shields 3 located between the two adjacent heat sinks 2 may not share a same fastening plate 3011. That is, the support strips 301 of the two shields 3 located between the two adjacent heat sinks 2 are separated from each other, and the two support strips 301 are two components.

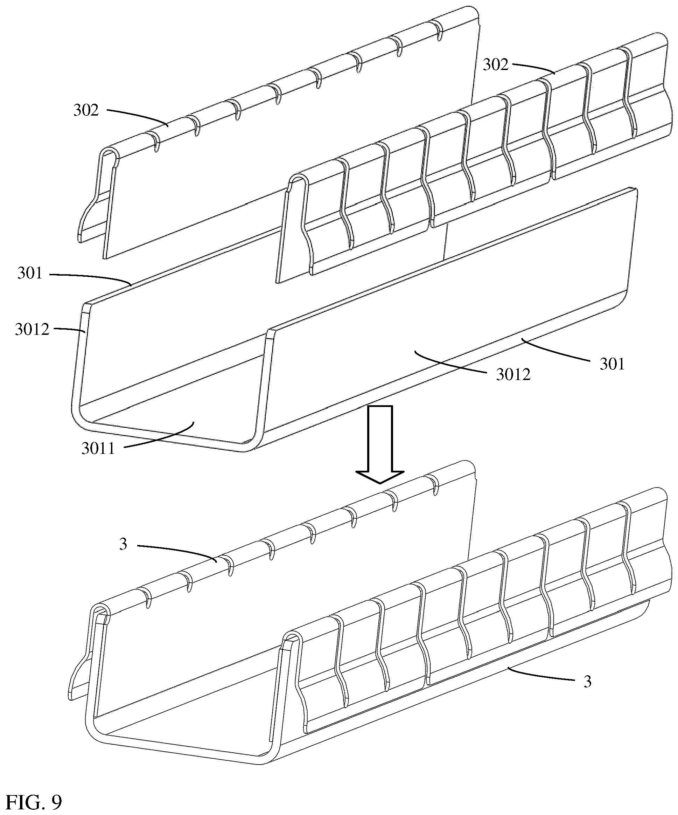

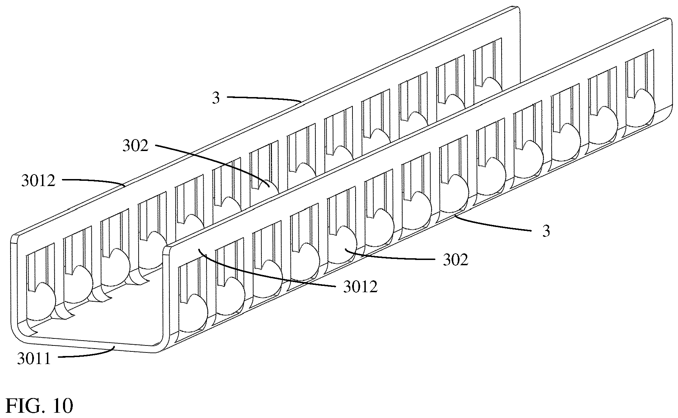

A manner of connecting the fastening plate 3011 and the support plate 3012 is not limited in this embodiment of this disclosure. In some examples, as shown in FIG. 6, FIG. 7, FIG. 9, and FIG. 10, the support strip 301 is integrally bent and formed. The support strip 301 of this type may also be referred to as an edge fold. The support strip 301 shown in FIG. 6 and FIG. 7 may be referred to as an L-shaped edge fold, and the support strip 301 shown in FIG. 9 and FIG. 10 may be referred to as a U-shaped edge fold. A manufacturing manner of bending and forming makes manufacturing of the support strip 301 more convenient and makes the support strip 301 have high strength.

Certainly, in some other examples, the fastening plate 3011 and the support plate 3012 may also be connected in a non-integrated manner. For example, the fastening plate 3011 and the support plate 3012 may be welded or bonded together.

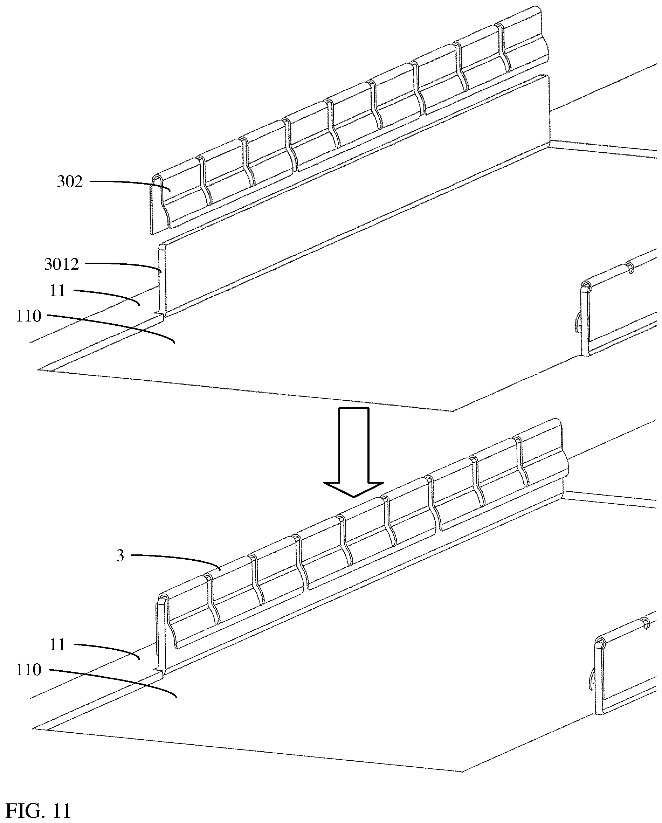

In addition to a form in which the support strip 301 includes the fastening plate 3011 and the support plate 3012, in some examples, as shown in FIG. 11, the support strip 301 includes the support plate 3012, and the side wall of the support plate 3012 is fastened to the first housing wall 11.

A manner of connecting the first housing wall 11 to the support plate 3012 is not limited in this embodiment of this disclosure. In some examples, as shown in FIG. 11, the support plate 3012 is integratedly connected to an edge of the window 110, and the support plate 3012 is bent against the first housing wall 11.

When the window 110 is manufactured on the first housing wall 11 of the optical cage 1, a part of metal wall may be first reserved at the edge of the window 110. Then, the part of metal wall is folded in a direction away from the inside of the optical cage 1, to form the support plate 3012.

In some other examples, the first housing wall 11 and the support plate 3012 may also be connected in a non-integrated manner. For example, the support plate 3012 may be welded or bonded to the first housing wall 11.

It should be noted that, in actual use, the support strips 301 in the foregoing two forms may be used separately or in combination. In some examples, a support strip 301 located at the long edge 111 of the window 110 is connected to the edge of the window 110, and a support strip 301 located at a remaining part is fastened to the first housing wall 11 through the fastening plate 3011.

The following describes the elastic piece 302 in more detail by using an example.

A fastening position of the elastic piece 302 is not limited in this embodiment of this disclosure. The elastic piece 302 may be fastened to the support strip 301, or may be fastened to the main body part 21. The following separately describes the two cases by using examples.

In some examples, as shown in FIG. 4 to FIG. 11, the elastic piece 302 is fastened to the support strip 301, and is tightly attached to the side wall 212 of the main body part 21.

A type of the fastening connection between the elastic piece 302 and the support strip 301 is not limited in this embodiment of this disclosure. For example, the elastic piece 302 and the support strip 301 may be welded, bonded, or integrated.

The elastic piece 302 is disposed to be fastened to the support strip 301, so that the shield 3 is manufactured more conveniently, and further the optical cage assembly is manufactured more conveniently.

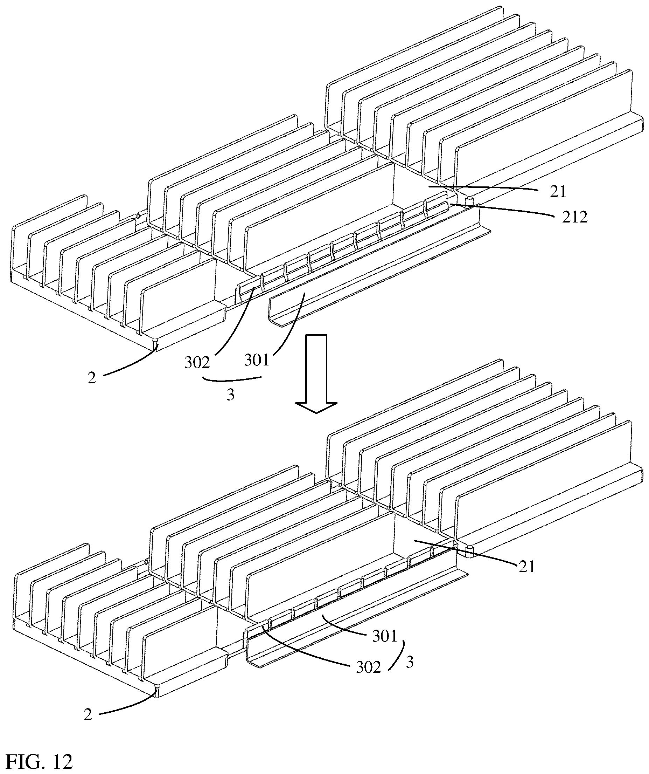

In some other examples, as shown in FIG. 12, the elastic piece 302 is fastened to the main body part 21, and is tightly attached to the support strip 301.

A type of the fastening connection between the elastic piece 302 and the main body part 21 is not limited in this embodiment of this disclosure. For example, the elastic piece 302 and the main body part 21 may be welded or bonded.

A position at which the elastic piece 302 is fastened is not limited in this embodiment of this disclosure. In some examples, the elastic piece 302 is fastened to the side wall 212 of the main body part 21. For example, after the heat sink 2 is manufactured, the elastic piece 302 may be welded or bonded to the side wall 212 of the main body part 21 of the heat sink 2.

It should be noted that, for an implementation form in which the elastic piece 302 is fastened to the main body part 21, it may also be considered that the elastic piece 302 is not a part of the shield 3, but is considered that the elastic piece 302 is a part of the heat sink 2. That is, the shield 3 includes the support strip 301, the side wall 212 of the main body part 21 of the heat sink 2 has the elastic piece 302, and the support strip 301 (or referred to as the shield 3) is tightly attached to the elastic piece 302.

A type of the elastic piece 302 is not limited in this embodiment of this disclosure. In some examples, the elastic piece 302 includes one or more of a metal spring plate, conductive foam, conductive rubber, and a metal spring point, but is not limited thereto.

In some examples, as shown in FIG. 6, the elastic piece 302 has a plurality of long strip-shaped holes distributed at spacings along a length direction. Certainly, the elastic piece 302 may also be a continuous plate body. This is not limited in this embodiment of this disclosure.

In some examples, as shown in FIG. 6, the elastic piece 302 is the metal spring plate. The metal spring plate includes a support part 3021 and a spring plate part 3022. The spring plate part 3022 is bent against the support part 3021, and the support part 3021 is opposite to the spring plate part 3022. The support plate 3012 extends between the support part 3021 and the spring plate part 3022, and is fixedly connected to the support part 3021. The spring plate part 3022 is in a suspended state, and therefore the spring plate part 3022 has good elasticity, and can be tightly attached to the side wall 212 of the main body part 21.

A manner of connecting the support part 3021 to the support plate 3012 is not limited in this embodiment of this disclosure. In some examples, the support part 3021 is welded to the support plate 3012 (for example, spot welding). In some other examples, the support part 3021 is bonded to the support strip 301.

It may be understood that the metal spring plate shown in FIG. 6 is merely a possible example, and does not constitute a limitation on this embodiment of this disclosure. During actual application, a metal spring plate of another form may be further used. For example, as shown in FIG. 12, the support part 3021 of the metal spring plate may further be fastened to the side wall 212 of the main body part 21, and the spring plate part 3022 is tightly attached to the support plate 3012.

In some examples, as shown in FIG. 7, the elastic piece 302 is a metal spring point. The metal spring point includes a connection plate 3023 and a spring point 3024. One end of the connection plate 3023 is connected to the support plate 3012, and the other end is connected to the spring point 3024. The spring point 3024 is in a suspended state, and therefore the spring point 3024 has good elasticity, and can be tightly attached to the side wall 212 of the main body part 21.

In some examples, as shown in FIG. 7, the support plate 3012 has a through hole, an end of the connection plate 3023 may be connected to an inner wall of the through hole, the through hole provides a moving space for the spring point 3024, and the spring point 3024 can swing in the through hole.

A specific form of the metal spring point is not limited in this embodiment of this disclosure. For example, the metal spring point may be a spherical spring point, a hemisphere spring point, a D-shaped spring point, or the like.

The following describes a position of the shield 3 in more detail by using an example.

In this embodiment of this disclosure, a quantity of shields 3 and an arrangement manner of the shields 3 on the first housing wall 11 of the optical cage 1 are not limited. The shields 3 may be randomly arranged on the first housing wall 11 based on an actual requirement. For example, a specific arrangement manner of the shields 3 may be determined based on a requirement on shielding performance and a specific form of the first housing wall 11.

In some examples, the optical cage assembly provided in this embodiment of this disclosure includes at least one shield 3. The shield 3 may be distributed around the heat sink 2 at any position on the first housing wall 11 of the optical cage 1, provided that the shield 3 is in contact with the heat sink 2.

To better understand the optical cage assembly provided in this embodiment of this disclosure, the following uses an example in which the window 110 is a rectangular window to describe an arrangement manner of the shields 3.

In some examples, there are a plurality of shields 3, and the plurality of shields 3 include at least two first shields 31. The two first shields 31 respectively extend along two long edges 111 of the window 110.

The long edge 111 is an edge extending along a length direction of the window 110. The length direction of the window 110 may be the same as an opening direction of the slot of the optical cage 1.

It should be noted that, that the two first shields 31 respectively extend along the two long edges 111 of the window 110 may be understood as that the two first shields 31 are located on two sides of two first side walls of the main body part 21 of the heat sink 2, and the two first side walls are respectively adjacent to the two long edges 111, and may also be understood as that the two first shields 31 are respectively located on sides of the two long edges 111 of the window 110.

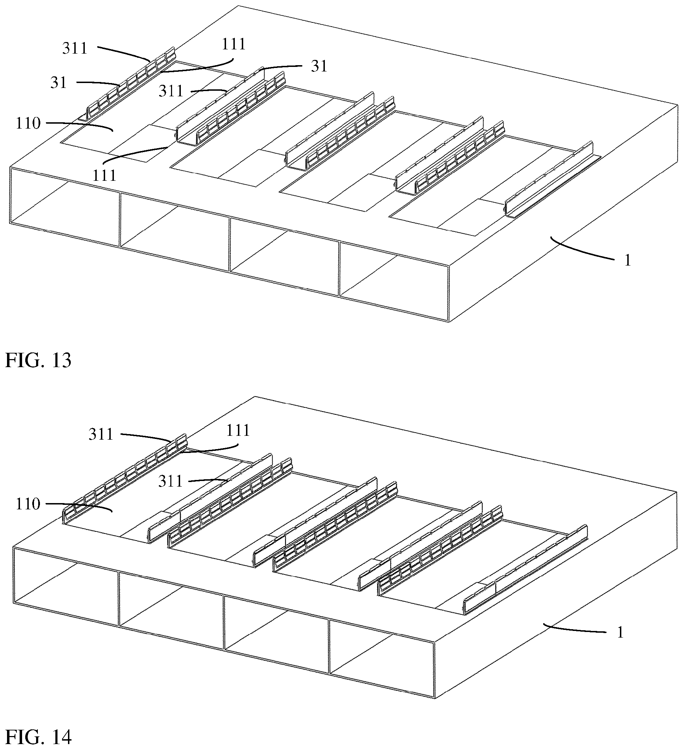

In some examples, as shown in FIG. 13 and FIG. 14, the first shield 31 includes at least a first shielding segment 311, and the first shielding segment 311 is located between two ends of the long edge 111.

That the first shielding segment 311 is located between two ends of the long edge 111 includes a case in which two ends of the first shielding segment 311 are flush with the two ends of the long edge 111.

In some examples, as shown in FIG. 13, the first shielding segment 311 is located on a side of the long edge 111.

In some other examples, as shown in FIG. 14, the first shielding segment 311 is integratedly connected to the long edge 111 of the window 110.

According to the technical solution provided in this embodiment of this disclosure, the first shielding segment 311 is disposed on a long edge 111 or a side of the long edge 111 on which more electromagnetic noise is leaked, so that shielding performance of the optical cage assembly can be effectively improved.

It should be noted that, that the first shielding segment 311 is located between two ends of the long edge 111 may be understood as that the first shielding segment 311 is located between two straight lines (a limited range) on which two wide edges 112 are located, and may also be understood as that the first shielding segment 311 is opposite to the long edge 111.

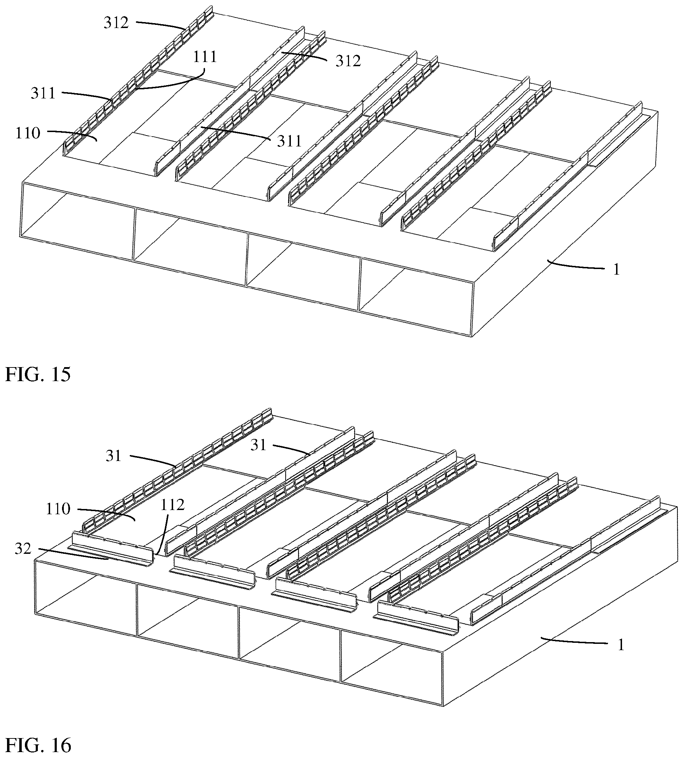

In some examples, as shown in FIG. 15, the first shield 31 further includes a second shielding segment 312, and the second shielding segment 312 is located outside the two ends (a limited range) of the long edge 111.

In the technical solution provided in this embodiment of this disclosure, the second shielding segment 312 is additionally disposed, so that shielding performance of the optical cage assembly can be further improved.

It should be noted that, that the second shielding segment 312 is located outside the two ends of the long edge 111 may be understood as that the second shielding segment 312 is located outside a range limited by the two straight lines on which the two wide edges 112 are located, and may also be understood as that the second shielding segment 312 is staggered from the long edge 111.

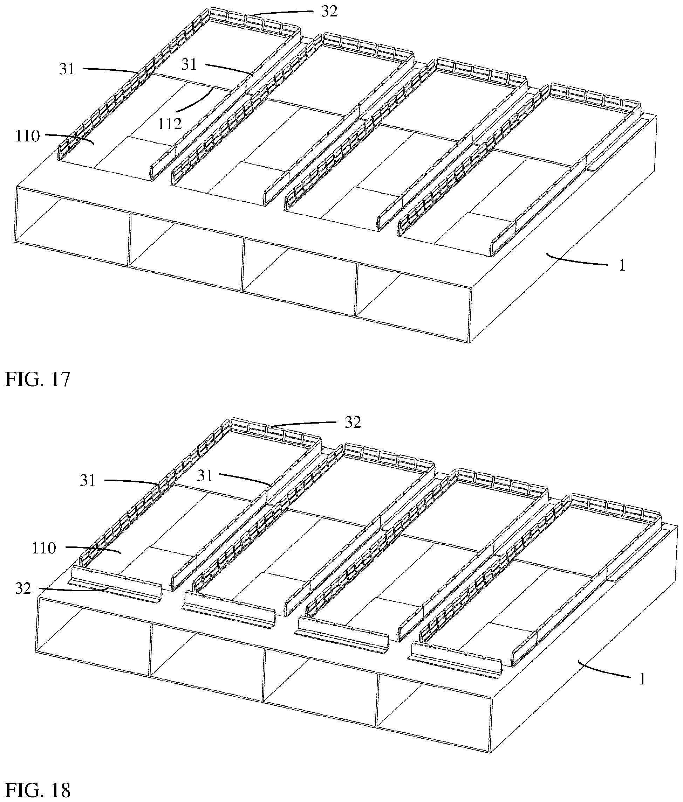

In some examples, as shown in FIG. 16 and FIG. 17, the plurality of shields 3 further include at least one second shield 32. The second shield 32 extends along any wide edge 112 of the window 110.

The wide edge 112 is an edge extending along a width direction of the window 110. The width direction of the window 110 may be perpendicular to an opening direction of the slot of the optical cage 1.

A distance between the second shield 32 and the wide edge 112 of the window 110 is not limited in this embodiment of this disclosure, and the distance between the second shield 32 and the wide edge 112 of the window 110 is determined by a size of the main body part 21 of the heat sink 2. In some examples, as shown in FIG. 16, the second shield 32 is adjacent to an opening of the slot 10, and is close to the wide edge 112. In some other examples, as shown in FIG. 17, the second shield 32 is away from the opening of the slot 10, and is far away from the wide edge 112.

It should be noted that, that the second shield 32 extends along the wide edge 112 of the window 110 may be understood as that the second shield 32 is located on a side of the wide edge 112 of the window 110, and may also be understood as that the second shield 32 is located on a side of a second side wall of the main body part 21 of the heat sink 2. The second side wall is adjacent to the wide edge 112.

In some examples, as shown in FIG. 18, there are two second shields 32, and the two second shields 32 respectively extend along the two wide edges 112 of the window 110. That is, a plurality of shields 3 enclose the window 110 (or referred to as enclosing the heat sink 2), and the optical cage assembly in this form has best shielding performance.

It should be noted that, the shielding structure is formed by using the shield 3 that is electrically conductive to suppress electromagnetic signal leakage. In addition, in some other examples, the shield 3 may alternatively be made of a wave-absorbing material, and is configured to improve shielding performance of the optical cage assembly by absorbing a leaked electromagnetic signal. It should be further noted that, when the shield 3 is made of the wave-absorbing material, a structure of the shield 3 may be the same as the structure of the shield 3 when the shield 3 is electrically conductive.

An embodiment of this disclosure further provides an optical communication device. The optical communication device includes the foregoing optical cage assembly.

According to the optical communication device provided in this embodiment of this disclosure, the optical cage assembly provided in this embodiment of this disclosure is applied, so that both heat dissipation performance of the optical communication device and electromagnetic noise shielding performance of the optical module are good.

Terms used in implementations of this disclosure are merely used to explain specific embodiments of this disclosure, and are not intended to limit this disclosure. Unless otherwise defined, technical terms or scientific terms used in implementations of this disclosure should have general meanings as those commonly understood by a person of ordinary skill in the art to which this disclosure pertains. The "first", "second" and similar words used in the specification and claims of this disclosure do not denote any order, quantity or importance, but are merely intended to distinguish between different constituents. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. Terms such as "up", "down", "left", and "right" are merely used to indicate a relative positional relationship. When an absolute position of an object described changes, the relative positional relationship may also change accordingly. "A plurality of" means two or more, unless otherwise expressly limited.

The foregoing descriptions are merely optional embodiments of the present disclosure, but are not intended to limit the present disclosure. Any modification, equivalent replacement, or improvement made without departing from the principle of the present disclosure should fall within the protection scope of the present disclosure.

## Claims

1. An optical cage assembly, wherein the optical cage assembly comprises an optical cage (1), a heat sink (2), and at least one shield (3);
a first housing wall (11) of the optical cage (1) is provided with a window (110);
the heat sink (2) comprises a main body part (21) and a boss part (22), a bottom wall (211) of the main body part (21) is connected to the boss part (22), the main body part (21) is located on an outer surface of the first housing wall (11), and the boss part (22) is located on the window (110); and
the at least one shield (3) is located on a path through which an electromagnetic signal leaks to the outside through the window (110), and is in contact with a side wall (212) of the main body part (21).

2. The optical cage assembly according to claim 1, wherein all the optical cage (1), the heat sink (2), and the at least one shield (3) are electrically conductive, and the at least one shield (3) is electrically connected to the optical cage (1) and the heat sink (2) separately.

3. The optical cage assembly according to claim 1, wherein the at least one shield (3) is made of a wave-absorbing material.

4. The optical cage assembly according to any one of claims 1 to 3, wherein each shield (3) comprises a support strip (301) and an elastic piece (302);
the support strip (301) is fastened on the outer surface of the first housing wall (11) and extends along any edge of the window (110); and
the elastic piece (302) is in contact with the support strip (301), and the elastic piece (302) is in contact with the side wall (212) of the main body part (21).

5. The optical cage assembly according to claim 4, wherein the support strip (301) comprises a fastening plate (3011) and a support plate (3012), and a surface of the fastening plate (3011) is fastened to a side wall of the support plate (3012);
a surface that is of the fastening plate (3011) and that is away from the support plate (3012) is fastened to the first housing wall (11); and
the support plate (3012) is fastened to or tightly attached to the elastic piece (302).

6. The optical cage assembly according to claim 5, wherein there are a plurality of heat sinks (2), and two shields (3) are disposed between two adjacent heat sinks (2); and
the two shields (3) are respectively in contact with the adjacent heat sinks (2), and support strips (301) of the two shields (3) share a same fastening plate (3011).

7. The optical cage assembly according to any one of claims 4 to 6, wherein the support strip (301) is integrally bent and formed.

8. The optical cage assembly according to claim 4, wherein the support strip (301) comprises the support plate (3012);
a side wall of the support plate (3012) is fastened to the first housing wall (11); and
the support plate (3012) is fastened to or tightly attached to the elastic piece (302).

9. The optical cage assembly according to claim 8, wherein the support plate (3012) is integratedly connected to an edge of the window (110), and the support plate (3012) is bent against the first housing wall (11).

10. The optical cage assembly according to any one of claims 4 to 9, wherein the elastic piece (302) is fastened to the support strip (301), and is tightly attached to the side wall (212) of the main body part (21).

11. The optical cage assembly according to any one of claims 4 to 9, wherein the elastic piece (302) is fastened to the main body part (21), and is tightly attached to the support strip (301).

12. The optical cage assembly according to any one of claims 4 to 11, wherein the elastic piece (302) comprises one or more of a metal spring plate, conductive foam, conductive rubber, and a metal spring point.

13. The optical cage assembly according to any one of claims 1 to 12, wherein the at least one shield (3) comprises at least two first shields (31); and
the two first shields (31) respectively extend along two long edges (111) of the window (110), wherein the long edge (111) is an edge extending along a length direction of the window (110).

14. The optical cage assembly according to claim 13, wherein each first shield (31) comprises at least a first shielding segment (311); and
the first shielding segment (311) is located between two ends of the long edge (111).

15. The optical cage assembly according to claim 14, wherein each first shield (31) further comprises a second shielding segment (312); and
the second shielding segment (312) is located outside the two ends of the long edge (111).

16. The optical cage assembly according to any one of claims 13 to 15, wherein the at least one shield (3) further comprises at least one second shield (32); and
each second shield (32) extends along any wide edge (112) of the window (110), wherein the wide edge (112) is an edge extending along a width direction of the window (110).

17. The optical cage assembly according to claim 16, wherein there are two second shields (32), and the two second shields (32) respectively extend along two wide edges (112) of the window (110).

18. An optical communication device, wherein the optical communication device comprises the optical cage assembly according to any one of claims 1 to 17.
